(19) Europäisches Patentamt / European Patent Office / Office européen des brevets

(11) EP 2 348 285 A2

(12) EUROPEAN PATENT APPLICATION

(43) Date of publication:
27.07.2011 Bulletin 2011/30

(51) Int Cl.:
G01C 23/00 (2006.01)          B64D 43/02 (2006.01)
G05D 1/00 (2006.01)

(21) Application number: 11150349.6

(22) Date of filing: 06.01.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.01.2010 US 693844

(71) Applicant: Honeywell International Inc.
Morristown, NJ 07962 (US)
(72) Inventors:
• Elias, Frank Rajkumar
Morristown, NJ 07962-2245 (US)
• Nathan, Visvanathan Thanigai
Morristown, NJ 07962-2245 (US)
• Wesley, Peter
Morristown, NJ 07962-2245 (US)

(74) Representative: Buckley, Guy Julian
Patent Outsourcing Limited
1 King Street
Bakewell
Derbyshire DE45 1DZ (GB)

(54) **Alternate airspeed computation when air data computer (adc) fails**

(57) An avionics system comprising a primary airspeed data source and a flight management computer is provided. The primary airspeed data source is configured to calculate a primary airspeed. The flight management computer is configured to use airspeed as an aid to control an aircraft, wherein the flight management computer is further configured to determine an alternative airspeed for use by the flight management computer as an aid to control an aircraft when the primary airspeed is unavailable.

FIG. 1

## Description

BACKGROUND

Maintaining a proper airspeed for the prevailing conditions during flight keeps an aircraft aloft. The measurement, computation, and display of calibrated airspeed (CAS) enables a pilot to maintain proper airspeed. Typically, CAS is provided only by an air data computer (ADC) through the use of pitot static sensors. Typically, an ADC has redundant features, and the pitot static sensors are also provided with redundancies and safety features to provide very high reliability. However, the chances of an ADC failure still exist. In case of an ADC failure, the airspeed information is unavailable to the pilot and the potential for a crash increases.

SUMMARY

One embodiment is directed to an avionics system comprising a primary airspeed data source and a flight management computer. The primary airspeed data source is configured to calculate a primary airspeed. The flight management computer is configured to use airspeed as an aid to control an aircraft, wherein the flight management computer is further configured to determine an alternative airspeed for use by the flight management computer as an aid to control an aircraft when the primary airspeed is unavailable.

The details of various embodiments of the claimed invention are set forth in the accompanying drawings and the description below. Other features and advantages will become apparent from the description, the drawings, and the claims.

DRAWINGS

Figure 1 is a block diagram of one embodiment of an avionics system that determines airspeed data when airspeed data from a primary airspeed data source is unavailable.

Figure 2 is a graph of one embodiment of a wind triangle showing the relationship between vectors representing ground speed (GS), wind speed (WS), and true airspeed (TAS) in level flight.

Figure 3 is a flow diagram of one embodiment of a method of computing and outputting calibrated airspeed (CAS).

Figure 4 depicts a graph of one example of the functional relationship between the coefficient of lift ($C_z$) and the angle of incidence ($\alpha$).

Like reference numbers and designations in the various drawings indicate like elements.

DETAILED DESCRIPTION

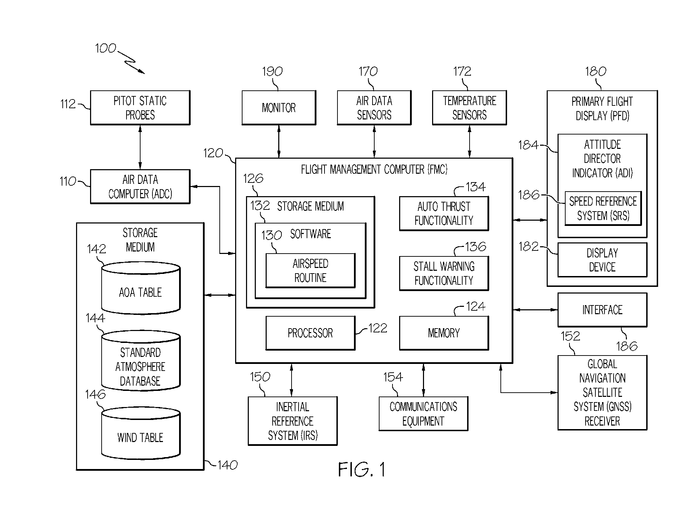

Figure 1 is a block diagram of one embodiment of an avionics system 100 that determines airspeed data when airspeed data from a primary airspeed data source is unavailable. In the embodiment described herein in connection with Figure 1, the primary airspeed data source is an air data computer (ADC) 110. In other embodiments, the primary airspeed data source is implemented in another device that provides an avionics system with airspeed data accurate enough for controlling an aircraft and maintaining a safe flight. The airspeed provided by the primary airspeed data source is referred to herein as the primary airspeed. In one implementation, the avionics system 100 is installed onboard an aircraft.

When functioning properly, the ADC 110 provides flight data, especially data relating to the aircraft's airspeed, to a flight management computer (FMC) 120. The FMC 120 uses the data from the ADC 110 as an aid to control the aircraft. For example, the FMC 120 determines what level of thrust to maintain based on the airspeed determined by the ADC 110. In other embodiments of the avionics system 100, the FMC 120 communicates the airspeed and an engine pressure ratio (EPR) or $N_1$ (first stage compressor rotations per minute) to maintain the airspeed of the aircraft to an external auto thrust control system, an automatic thrust functionality 134, or the like.

The ADC 110 receives airspeed data from pitot static probes 112. Typically multiple redundant pitot static probes 112 are installed on the aircraft in order to increase the redundancy of the ADC 110. The ADC 110 computes calibrated airspeed (CAS), Mach number, altitude, and altitude trend data from the information it receives from the pitot static probes 112. Calibrated airspeed (CAS) is the indicated airspeed for the aircraft corrected for errors, such as instrument errors, position errors, and installation errors. Indicated airspeed for the aircraft is an airspeed reading that is uncorrected for those errors. The FMC 120 uses the CAS of the aircraft for critical flight management and control functions. For example, without knowing the CAS of the aircraft, the FMC 120 does not know what thrust will maintain level flight or whether the aircraft is undergoing a stall. Another measure of airspeed of the aircraft, the true airspeed (TAS), is the speed of the aircraft relative to the airmass in which it is flying. As described herein, the true airspeed of the aircraft can be used when the CAS of the aircraft from the primary airspeed data source is unavailable.

The ADC 110 is typically a redundant system with many safety features. Some aircraft may have more than one ADC 110 installed onboard. Despite these redundancies, the ADC 110 is not immune to failure. For example, one or all of the pitot static probes 112 may ice up, provide incorrect data to the ADC 110, or the ADC 110 itself can fail. If the ADC 110 fails and there is no alternative source of airspeed information, a catastrophic situation may occur within seconds. In aircraft with fly-by-wire flight control systems, the TAS of the aircraft is needed for controlling the aircraft. The FMC 120 is typically unable to fly the aircraft without a value for the true or calibrated airspeed of the aircraft. In order to avoid such catastrophic situations, in the avionics system 100 shown in Figure 1, the FMC 120 computes the flight data in situations where the ADC 110 fails.

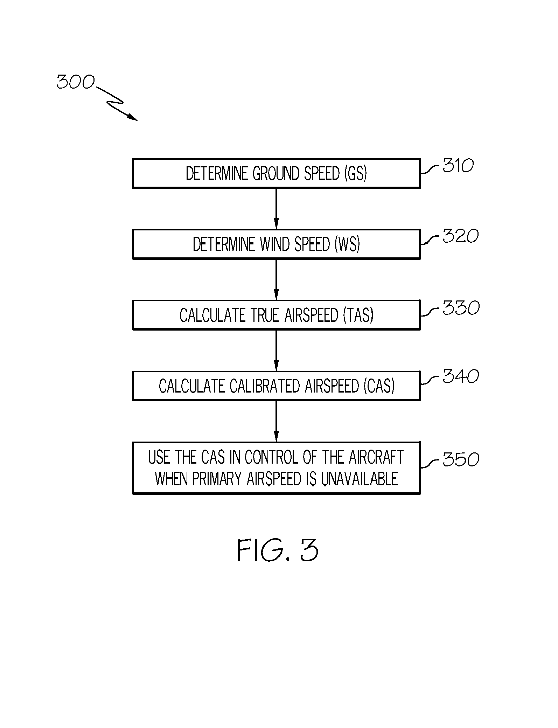

The FMC 120 comprises a processor 122, a memory 124, and an airspeed routine 130 that calculates flight information such as airspeed independently of the ADC 110. The airspeed routine 130 is implemented in software 132 that is executed by the processor 122. The software 132 comprises program instructions that are stored or otherwise embodied on or in a suitable storage device or medium 126. The storage medium 126 on or in which the program instructions are embodied is also referred to here as a "program product". The software 132 is operable, when executed by the processor 122, to cause the FMC 120 (and more generally the aircraft in which the FMC 120 is deployed) to carry out various functions described here as being performed by the FMC 120 (for example, at least a portion of the processing described below in connection with Figure 3).

Suitable storage devices or media 126 include, for example, forms of non-volatile memory, including by way of example, semiconductor memory devices (such as Erasable Programmable Read-Only Memory (EPROM), Electrically Erasable Programmable Read-Only Memory (EEPROM), and flash memory devices), magnetic disks (such as local hard disks and removable disks), and optical disks (such as Compact Disk - Read Only Memory (CD-ROM) disks). Moreover, the storage device or media 126 need not be local to the FMC 120 or the avionics system 100. In the embodiment described here, the storage device or medium 126 is non-transitory. Typically, a portion of the software 132 executed by the processor 122 and one or more data structures used by the software 132 during execution are stored in the memory 124. The memory 124 comprises, in one implementation of such an embodiment, any suitable form of random access memory (RAM) now known or later developed, such as dynamic random access memory (DRAM). In other embodiments, other types of memory are used. The components of the FMC 120 are communicatively coupled to one another as needed using suitable interfaces and interconnects.

The airspeed routine 130 calculates calibrated airspeed (CAS) of the aircraft and other flight information such as angle of incidence ($\alpha$), ground speed (GS), wind speed (WS), and true airspeed (TAS). The angle of incidence ($\alpha$) describes the angle between a reference line on the aircraft and the air through which the aircraft is moving. Ground speed (GS) is the speed of the aircraft with respect to the ground or terrain below. Wind speed (WS) is the speed of the wind relative to the ground.

The airspeed routine 130 uses data collected from sources other than those used by the ADC 110 to calculate the CAS and TAS for the aircraft. The data can be obtained from air data sensors 170, entered by a pilot, be received through communications equipment 154, or be determined by a global navigation satellite system (GNSS) receiver 152 or an inertial reference system (IRS) 150. In other words, the IRS 150, the GNSS 152, the communications equipment 154, or other suitable equipment, provides the ground track and ground speed of the aircraft. The ground track of an aircraft is the course of the aircraft traced on the surface of the Earth. In another embodiment of the airspeed routine 130, data from the pitot static sensors 112, when available, is used in calculating the CAS of the aircraft.

A monitor 190 records the indicated airspeed from one or more of the pitot static probes 112. The FMC 120 comprises additional functionality including the automatic thrust functionality 134 and a stall warning functionality 136. The auto thrust functionality 134 enables the FMC 120 to control the thrust of the aircraft. The stall warning functionality 136 provides warnings to a user (such as a pilot) if the aircraft enters a stall. Typically if an indicated airspeed reduces rapidly, a stall warning is triggered in the cockpit and the aircraft's automatic thrust functionality 134 is disengaged or remains engaged. Examples of stall warnings that the stall warning functionality 136 initiates include an aural warning "STALL, STALL" or a visual stall warning displayed on a Primary Flight Display (PFD) 180. Another example of a stall warning is a stick shaker that vibrates a control yoke of the aircraft. Other stall warnings can also be used.

If any or all indicated airspeeds reduce rapidly without a corresponding change in angle of incidence of the aircraft, the stall warning functionality 136 should be disabled and the auto thrust functionality 134 freezes the aircraft's thrust at the current level. A rapid reduction in airspeed is one in which the indicated airspeed reduces rapidly without a corresponding change in angle of incidence. This indicates a failure of the pitot static probes 112 which in turn indicates a failure of the air data computer 110. Thus, the auto thrust functionality 134 prevents thrust increasing due to the incorrect reduction in indicated airspeed if the auto thrust remains engaged. Therefore, the FMC 120 automatically disables stall warnings and maintains the aircraft's thrust at the current level if the airspeed from the primary airspeed data source (or the alternative airspeed source) reduces by more than a predetermined threshold rate.

In another embodiment of the avionics system 100, the IRS 150 generates a flight path vector (FPV) that indicates on the ADI 184 a flight path angle (FPA) and the track of the aircraft. The FPV is also referred to as a "bird" because the display typically resembles a bird. The FPV is displayed in the primary flight display 180 to enable a pilot to maintain level flight by aligning the wings of the bird with a horizontal on the ADI 184. Also, pitch attitude for the prevailing weight and altitude conditions are displayed on the ADI 184 in the form of a Speed Reference System (SRS) 186, enabling the pilot to maintain the calculated calibrated air speed, which can be either a single value or a mean of a plurality of values. The parameters of pitch, weight, altitude, or configurations versus $EPR/N_1$ information are available from the aircraft's Quick Reference Handbook (QRH) in the form of a table and can be stored in a database in the storage medium 140. The SRS 186 is enabled when the primary airspeed is unreliable (for example, during a failure of the pitot static probes 112) to guide and indicate to the pilot the aircraft's FPV and track, as well as the thrust setting and the pitch attitude to be maintained for the current weight and altitude of the aircraft.

Air data sensors 170 collect air data information and can include vane type sensors or the like. Temperature sensors 172 provide the temperature of the air external to the aircraft, which is used in determining the density of the air at altitude. The communications equipment 154 provides a communications link to the ground and can be used to receive information such as the ground speed of the aircraft or wind speed at the aircraft's atmospheric position. The communications equipment 154 can establish a radio link, a SATCOM link, or any other suitable communications link. An interface 186 provides a user (such as a pilot) the ability to enter information for calculation of the calibrated airspeed of the aircraft, such as for example, the aircraft's ground speed or wind speed obtained from the ground through a radio link. This information can be provided to the FMC 120. Embodiments of the interface 186 include a keyboard, a touchpad, or any other suitable interface now known or later developed.

The inertial reference system (IRS) 150 senses the orientation of the IRS 150 with respect to the terrain to provide attitude data for the aircraft. In one implementation of the embodiment shown in Figure 1, the IRS 150 includes an inertial measurement unit (IMU) that includes accelerometers and gyroscopes for sensing motion of the aircraft, such as a linear change in rate along a given axis and a change in angular rate. The IRS 150 can be used to determine information relating to the ground speed (GS) of the aircraft. The GNSS receiver 152 determines the position of the aircraft and is also configured to detect data relating to the ground speed. The ground speed information is provided to the FMC 120 for computation of the CAS of the aircraft.

A storage medium 140 stores an angle of incidence table 142 and a standard atmosphere database 144 used by the airspeed routine 130 in calculating the calibrated airspeed. The storage medium 140 also stores a wind table 146 that can be used to obtain WS from weather statistics. The angle of incidence table 142 provides a relationship between the angle of incidence and coefficient of lift of the aircraft. The standard atmosphere database 144 provides the density of the air at a given altitude and temperature. Suitable storage devices or media 140 include, for example, forms of non-volatile memory, including by way of example, semiconductor memory devices (such as Erasable Programmable Read-Only Memory (EPROM), Electrically Erasable Programmable Read-Only Memory (EEPROM), and flash memory devices), magnetic disks (such as local hard disks and removable disks), and optical disks (such as Compact Disk - Read Only Memory (CD-ROM) disks). Moreover, the storage device or media 140 need not be local to the avionics system 100. In another embodiment of the avionics system 100, one or more of the angle of incidence table 142, the standard atmosphere database 144, and the wind table 146 are stored in the storage medium 126.

The avionics system 100 further comprises a primary flight display 180. The primary flight display 180 displays flight information to a pilot on a display device 182 or an attitude director indicator (ADI) 184 located, for example, in a cockpit of the aircraft. The display device 182 can be any display device operable to display flight information such as airspeed data, for example a digital display, an LCD monitor, an LED display, or the like. The attitude director indicator 184 is an instrument for displaying a pitch SRS (Speed Reference System) bar corresponding to the pitch of the aircraft appropriate to the weight, flight level, and thrust of the aircraft. The primary flight display 180 is configured to provide aural displays to the pilot, such as a stall warning. In other embodiments of the avionics system 100, the primary flight display 180 comprises any suitable display system that can display flight information.

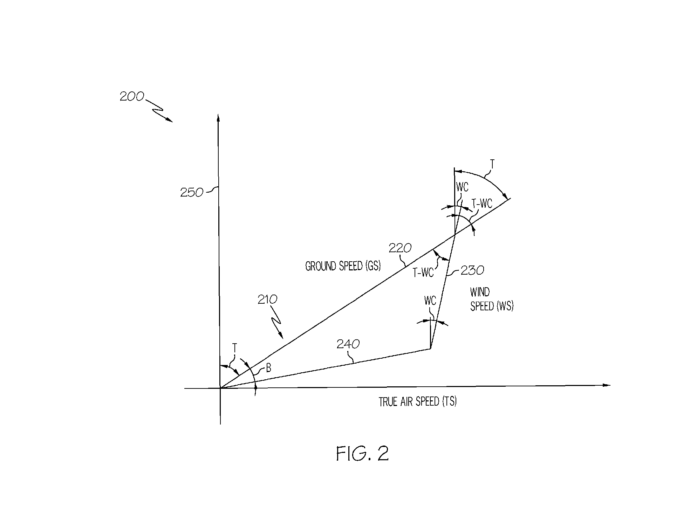

The TAS for the aircraft can be obtained from the WS and GS of the aircraft or from the angle of incidence of the aircraft. Figure 2 is one embodiment of a graph 200 of a wind triangle 210 showing the relationship between vectors representing ground speed (GS) 220, wind speed (WS) 230, and true airspeed (TAS) 240 in level flight. The vertical axis 250 serves as a reference direction (for example, along the north cardinal direction or a line of longitude). The angle subtended between the GS 220 and the axis 250 is the track angle (T). The angle subtended between the axis 250 and the WS 230 is the wind course (WC). The angle subtended between GS 220 and WS 230 is equal to T minus WC. Therefore, the TAS 240 can be obtained from the cosine law:

$$TAS^2 = GS^2 + WS^2 - 2 \cdot GS \cdot WS \cdot \cos(T - WC) \qquad (1)$$

In one embodiment, the FMC computes the TAS using the values of the GS and WS obtained from the air data sensors, the GNSS receiver 152, from the IRS 150, from ground sources with the communication equipment 154, or from other onboard sources. However, in other embodiments, TAS is computed by other processing components or elements.

Figure 3 is a flow diagram of one embodiment of a method 300 of computing and outputting calibrated airspeed (CAS). The embodiment of method 300 shown in Figure 3 is described here as being implemented using the avionics system 100 of Figure 1, though other embodiments are implemented in other ways.

The method 300 begins with the FMC 120 determining the ground speed (GS) (block 310). In level flight, the GS is obtained from the GNSS receiver 152, from the IRS 150, from ground sources with the communication equipment 154, or from other onboard sources. The FMC 120 also determines the wind speed (WS) (block 320). WS is used for ground track correction, performance and flight path computations and can also be used to obtain TAS.

There are several ways in which the FMC 120 can determine the WS. First, WS can be entered by a user (such as a pilot or another crewmember). For example, the user reads an air data sensor 170 and obtains the WS or receives the WS aurally over a communication link with the communications equipment 154. The user then enters the WS into the FMC 120 using the interface 186. In one embodiment, the WS entered by the user is based on the wind table 146 and its statistics. Other methods for obtaining the WS include the FMC 120 obtaining the WS directly from air data sensors 170 or uplinked from the ground through communications equipment 154. When the ADC 110 is working, the WS is generally computed from the GS and the TAS calculated by the ADC 110. When the ADC 110 is unavailable, WS can be calculated or obtained from the above mentioned methods, or any other way known to one of ordinary skill in the art. When the pitot static probes 112 fail and result in an incorrectly lower CAS or even zero CAS, the WS calculated from the incorrect CAS will be unrealistically large. The resultant error in the WS can almost be as large as the corresponding drop in TAS that the ADC 110 derived from the incorrect CAS.

More than one value of the WS can be obtained. In one implementation of determining WS, two or more values of the WS are blended to provide a single value of WS to improve its accuracy. Techniques for blending include averaging, calculating a weighted average, or any other known blending method. In another implementation, the WS and the direction of the wind is provided from a stored last WS and wind direction recoded by the monitor 190 and triggered by a failure of the pitot static probes 112.

From the WS and GS, the FMC 120 can calculate the TAS of the aircraft using the cosines law in Equation (1) (block 330). In one implementation, the computed TAS may be reduced to indicated airspeed by the FMC 120 in reverse calculation from the last recorded ambient conditions at the same altitude.

In an alternative embodiment of the method 300, TAS of the aircraft is calculated using the angle of incidence ($\alpha$) and lift (L) of the aircraft instead of determining GS and WS. In level flight, the lift produced by the aircraft is equivalent to the weight of the aircraft. The aircraft's weight is typically known and computed by the FMC 120, therefore L is known in level flight. The angle of incidence ($\alpha$) of the aircraft is used to determine the coefficient of lift ($C_Z$).

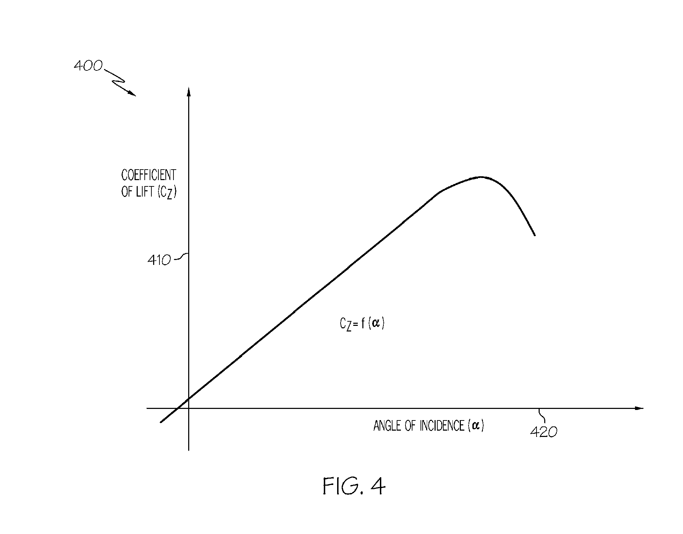

Figure 4 depicts a graph of one example of the functional relationship between the coefficient of lift ($C_Z$) 410 and the angle of incidence ($\alpha$) 420. The angle of incidence is computed by the FMC 120 or other onboard equipment other than the ADC 110 using the input from the air data sensors 170 (such as AoA vane type sensors). In one embodiment, the angle of incidence is not determined from the pressure inputs of the pitot static probes 112. The relationship between $\alpha$ and $C_Z$ is known and depends upon the given type of aircraft. $C_Z$ is determined from this relationship.

To calculate TAS from $\alpha$ and L, other parameters such as altitude of the aircraft are determined. Altitude is provided from the GNSS receiver 152, IRS 150, communications equipment 154, or other external or internal sources, whichever is possible. Once the altitude is known, the density of the air at altitude ($\rho$) is obtainable from the standard atmosphere database 144 or from the ground. The surface area of the wing (S) affected by the wind is also known. With these parameters, the TAS of the aircraft can be obtained with the following equation:

$$L = \frac{1}{2}\rho \cdot TAS^2 \cdot S \cdot C_Z \qquad (2)$$

The indicated airspeed of the aircraft can also be calculated from the relationship between the coefficient of lift and weight. These computations can be done by the FMC 120 and displayed in a prominent and appropriate location, such as the ADI 184, for the aircraft crew to follow in the interim till further action is determined.

Returning to Figure 3, the FMC 120 calculates the CAS of the aircraft from the aircraft's TAS (block 340). This calculation is based on the assumption that the temperature variation in the Standard Atmosphere model is altered by the temperature deviation (that is, deviation from standard) entered by the pilot (or obtained in any other suitable manner) and is assumed to be the prevailing temperature at altitudes for computing speed of sound. Knowing the temperature at altitude ($T_a$), the FMC 120 can determine the speed of sound at that altitude (a):

$$a = 20.05\sqrt{T_a} \qquad (3)$$

TAS is related to the Mach number (Mach) and the speed of sound at altitude (a):

$$TAS = Mach \cdot a \qquad (4)$$

Using Equation 4, the Mach number can be derived from the TAS and speed of sound (a) at that altitude.
For Mach < 1:

$$Mach = \sqrt{\frac{\left(\dfrac{P_p - P_a}{P_a} + 1\right)^{\frac{1}{3.5}} - 1}{0.2}} \qquad (5)$$

where $P_p$ is the dynamic pressure and $P_a$ is the static pressure of the air.
From Equation 5, the FMC 120 can find ($P_p$ - $P_a$)/$P_a$. $P_a$ is determined from the altitude obtained from the GNSS receiver 152, IRS 150, communications equipment 154, or the air data sensors 170 in conjunction with the standard atmosphere database 144. Therefore, ($P_p$ - $P_a$) can be found, and using ($P_p$ - $P_a$) the FMC 120 can find the CAS of the aircraft. For Mach < 1:

$$CAS = a_o \sqrt{\frac{\left(\dfrac{P_p - P_a}{1013.2} + 1\right)^{\frac{1}{3.5}} - 1}{0.2}} \qquad (6)$$

where $a_o$ is the speed of sound at $T_a$ = 288.15 K.
The alternative CAS of the aircraft calculated by the FMC 120 is used by the FMC 120 for controlling the aircraft when the primary airspeed from the ADC 110 is unavailable (block 350). For example, the CAS of the aircraft can be output on the primary flight display 180 for use by the pilot in controlling the aircraft. Also, the alternative CAS of the aircraft can be used by the FMC 120 in place of the primary airspeed provided by the ADC 110 in connection with the processing the FMC 120 performs. This provides an alternative to the ADC 110 inputs in case of an emergency. In other words, the pilot or the FMC 120 can use this calculated value of CAS 110 to safely fly the aircraft in case of a failure of the ADC 110.
The accuracy of the computed TAS and CAS of the aircraft depends on the accuracy of the wind vector at the particular flying altitude. The shorter the time duration between measuring WS and calculating CAS, the more accurate the CAS will be. WS determined from the wind table or uplinked from the ground will typically result in less accurate values of TAS and CAS, however the accuracy is sufficient for the pilot or FMC 120 to fly in the interim in case of a failure of the ADC 110. In one embodiment of the method 300, the FMC 120 checks the CAS of the aircraft to determine whether that airspeed is maintainable within the defined envelope of the current flight parameters.
In a typical avionics system, there is no alternative to the ADC to provide the TAS and CAS of the aircraft in case of an ADC failure. The existing FMC is enhanced and flight safety is improved by providing the TAS and CAS (that is, alternate airspeed) in case of an ADC failure (that is, unavailability of primary airspeed). The TAS and CAS are computed from the existing data onboard when ADC or pitot static sensors fail.

Some aircraft crashes, especially passenger aircraft, have been due to the failure of all ADCs which in turn was due to the failure of all pitot static sensors. These failures caused the unavailability of TAS to the flight management computer (FMC) or CAS to the pilot. Computing TAS and CAS as described herein will provide this information in those extreme cases when the primary airspeed is unavailable.

A number of embodiments of the invention defined by the following claims have been described. Nevertheless, it will be understood that various modifications to the described embodiments may be made without departing from the spirit and scope of the claimed invention. Features described with respect to one embodiment can be combined with, or substituted for, features described in other embodiments. Accordingly, other embodiments are within the scope of the following claims.

**Claims**

1. An avionics system (100), the system comprising:

   a primary airspeed data source (110), wherein the primary airspeed data source is configured to calculate a primary airspeed; and
   a flight management computer (120) configured to use airspeed as an aid to control an aircraft, wherein the flight management computer is further configured to determine an alternative airspeed for use by the flight management computer as an aid to control the aircraft when the primary airspeed is unavailable.

2. The avionics system of claim 1, wherein the flight management computer is further configured to:

   calculate a true airspeed of the aircraft (240); and
   calculate a calibrated airspeed of the aircraft.

3. The avionics system of claim 2, wherein the alternate airspeed comprises the calibrated airspeed.

4. The avionics system of claim 2, wherein the flight management computer is configured to calculate the true airspeed of the aircraft by:

   determining a ground speed of the aircraft (220);
   determining a wind speed (230); and
   calculating the true airspeed from the ground speed and the wind speed.

5. The avionics system of claim 2, wherein the flight management computer is configured to calculate the true airspeed of the aircraft by:

   determining an angle of incidence of the aircraft (420);
   determining a coefficient of lift of the aircraft (410); and
   calculating the true airspeed from the angle of incidence and the coefficient of lift.

6. The avionics system of claim 1, further comprising:

   a primary flight display (180), wherein the primary flight display is configured to:

   display the calibrated airspeed of the aircraft; and
   enable a speed reference system (186) when the primary airspeed is unavailable, wherein the speed reference system displays a flight path vector of the aircraft.

7. A method of providing airspeed data to an avionics system onboard an aircraft (300), the method comprising:

   calculating a true airspeed of the aircraft (330);
   calculating a calibrated airspeed from the true airspeed (340); and
   using the calibrated airspeed to control the aircraft when a primary airspeed data source is unavailable (350).

8. The method of claim 7, wherein calculating true airspeed further comprises:

   determining a ground speed of the aircraft (310); and
   determining a wind speed (320).

9. The method of claim 8, further comprising:

   wherein determining the wind speed further comprises determining the wind speed from at least one source selected from a group consisting of onboard sensors (170), user entry, uplink from ground, or from a wind table (146); and
   wherein determining the ground speed of the aircraft further comprises determining ground speed of the aircraft from data received from at least one of a user, ground, a global navigation satellite system receiver (152), or an inertial reference system (150).

10. The method of claim 7, wherein calculating the true airspeed of the aircraft further comprises:

    determining a lift of the aircraft;
    determining a coefficient of lift of the aircraft (410); and
    calculating the true airspeed of the aircraft from the lift and the coefficient of lift.

FIG. 1

FIG. 2

300

DETERMINE GROUND SPEED (GS) — 310

↓

DETERMINE WIND SPEED (WS) — 320

↓

CALCULATE TRUE AIRSPEED (TAS) — 330

↓

CALCULATE CALIBRATED AIRSPEED (CAS) — 340

↓

USE THE CAS IN CONTROL OF THE AIRCRAFT WHEN PRIMARY AIRSPEED IS UNAVAILABLE — 350

FIG. 3

400

COEFFICIENT
OF LIFT (C$_Z$)

410

$C_Z = f(\alpha)$

ANGLE OF INCIDENCE ($\alpha$)

420

FIG. 4